# EUROPEAN PATENT APPLICATION

(11) **EP 3 190 304 A1**
(43) Date of publication of application: **12.07.2017**
(21) Application number: 15838507.0
(22) Date of filing: 01.09.2015
(51) Int. Cl.: F16D 41/07

(54) **RIBBON SPRING FOR SPRAG-TYPE ONE-WAY CLUTCH, AND SPRAG-TYPE ONE-WAY CLUTCH**

(30) Priority: 01.09.2014 JP 2014176979
(71) Applicant: NTN Corporation, Osaka-shi, Osaka 550-0003 (JP)
(72) Inventor: FUKAMI Rino, Iwata-shi Shizuoka 438-8510 (JP)
(74) Representative: Grünecker Patent- und Rechtsanwälte PartG mbB
(86) International application number: PCT/JP2015/074818
(87) International publication number: WO 2016/035781

(57) **Abstract**

A ribbon spring of a sprag type one-way clutch is an elongated strip (51) of sheet metal, and includes tongues (54) which bias the sprags (30) in the direction in which the sprags (30) engage, and which can smoothly slide on the sprags (30). The strip (51) includes a plurality of pockets (52) formed by punching, which is a kind of shearing, so as to be spaced apart from each other in the longitudinal direction of the strip (51), to define bridges (53) between respective adjacent pairs of the pockets (52). Each tongue (54) protrudes from one circumferential side of one of the bridges (53) into the pocket (52). The strip (51) is mounted between an outer ring (10) and an inner ring (20), while being bent in a circular shape such that the sprags (30), which are inserted in the respective pockets (52), are biased by the respective tongues (54) in the direction in which the sprags (30) engage. Each tongue (54) has a cut surface formed by shearing at its distal end, and including a droop (58). The strip (51) is bent in the circular shape such that each droop (58) is located on the radially outer side of the cut surface, and in contact with the sprag (30). This ensures smooth sliding of the tongues (54).

## Description

### TECHNICAL FIELD

The present invention relates to a ribbon spring of a sprag type one-way clutch for use in e.g., a torque converter of a motor vehicle, and a sprag type one-way clutch including such a ribbon spring.

### BACKGROUND ART

This type of sprag one-way clutch includes, as disclosed in the below-identified Patent documents 1-3, a plurality of sprags mounted between an outer ring and an inner ring, and retained by an outer retainer and an inner retainer mounted between the outer ring and the inner ring. The sprags are biased by a ribbon spring mounted between the outer retainer and the inner retainer in a direction in which an outer ring-side cam surface and an inner ring-side cam surface formed on the respective ends of each sprag are brought into contact with the outer ring radially inner surface and the inner ring radially outer surface, respectively.

The ribbon spring comprises an elongated strip of sheet metal having a plurality of pockets formed by punching so as to be spaced apart from each other in the longitudinal direction of the strip, thereby defining bridges between the adjacent pairs of pockets. The bridges include tongues. With the sprags inserted in the respective pockets, the ribbon spring is bent into a circular shape such that its ends overlap with each other, and mounted between the outer retainer and the inner retainer such that the tongues apply to the sprags a moment that tends to bias the sprags in a direction in which the outer ring-side cam surface and the inner ring-side cam surface which are formed on the respective ends of each sprag are brought into contact with the outer ring radially inner surface and the inner ring radially outer surface, respectively.

### PRIOR ART DOCUMENTS

### PATENT DOCUMENTS

Patent document 1: JP Patent Publication 63-259225A
Patent document 2: JP Patent Publication 2004-68832A
Patent document 3: JP Patent Publication 2008-106834A

### OBJECT OF THE INVENTION

With this sprag type one-way clutch, the outer ring-side cam surface and the inner ring-side cam surface of each sprag are brought into or out of engagement with the outer ring radially inner surface and the inner ring radially outer surface, respectively, by inclining the sprags in the circumferential direction, thereby selectively coupling together, and uncoupling, the outer ring and the inner ring. When the sprags are inclined, the tongues of the ribbon spring and the sprags slide on each other. If the friction coefficient at the slide contact portions of the tongues and the sprags is large, the tongues cannot smoothly slide on the sprags, and could be damaged, or even destroyed, by getting stuck in the circumferential direction, especially if the inner and outer rings are rotating at a high speed when the sprags disengage from the inner and outer rings, thereby allowing the inner ring, which has been locked to the outer ring through the sprags, to rotate independently of the outer ring.

If one or some of the tongues are damaged, it becomes impossible to apply to the corresponding sprags a moment that tends to bring these sprags into contact with the inner and outer rings. Thus, when the sprags are supposed to be moved from the disengaged state to the engaged state, the sprags corresponding to the damaged tongues are engaged, and loads are applied thereto, later than the other sprags. This results in the other sprags being brought into engagement with the inner and outer rings under higher surface pressures, which could cause abnormal wear, and thus peeling, at the portions where the other sprags engage the inner and outer rings.

Also, if one or some of the tongues are damaged, pieces of the damaged tongues could become wedged between the sprags and the inner and/or outer rings such that the sprags cannot disengage from the inner and outer rings.

An object of the present invention is to provide a ribbon spring of which the tongue can smoothly slide on the sprags.

### MEANS FOR ACHIEVING THE OBJECT

In order to achieve this object, the present invention provides a ribbon spring of a sprag type one-way clutch, comprising an elongated strip of sheet metal including a plurality of pockets formed by punching, which is a kind of shearing, so as to be spaced apart from each other in a longitudinal direction of the strip, to define bridges between respective adjacent pairs of the pockets, the strip further including tongues each protruding from one circumferential side of one of the bridges into a corresponding one of the pockets, wherein the strip is mounted between an outer ring and an inner ring of the sprag type one-way clutch, while being bent in a circular shape such that sprags of the sprag type one-way clutch , which are inserted in the respective pockets, are biased by the respective tongues in a direction in which the sprags engage, wherein the tongues each have a cut surface formed by shearing at a distal end of the tongue, the cut surface including a droop, and the strip is bent in the circular shape such that the droops of the respective tongues are each located on the radially outer side of the cut surface, and are in contact with the respective sprags.

The present invention also provides a sprag type one-way clutch comprising an outer ring, an inner ring, a plurality of sprags mounted between the outer ring and the inner ring, a retainer retaining the sprags, and a ribbon spring biasing the sprags in a direction in which the sprags engage, wherein the ribbon spring comprises the ribbon spring according to the present invention.

Ordinarily, when a metal sheet is subjected to punching, which is a kind of shearing, an arc-shaped droop forms on the cut surface first, and then a shear surface portion and a fractured surface portion form on the cut surface. Thus, by forming the tongues on the ribbon spring according to the present invention simultaneously when punching the pockets, a droop having an arc-shaped section, a shear surface portion, and a fractured surface portion form on the cut surface of each tongue at its distal end. By bending the strip into a circular shape such that each droop is located on the radially outer side of the cut surface, and inserting the sprags in the pockets, the sprags are biased by the respective tongues in the direction in which the sprags engage, with the droops in contact with the sides of the sprags. This ensures smooth sliding of the tongues on the sprags.

Preferably, with the strip bent in the circular shape, each tongue includes a radially inwardly protruding V-shaped bent portion located at the center of the tongue in the longitudinal direction of the strip. With this arrangement, when the sprags are inclined while being in contact with the tongues, the tongues can be smoothly deflected or pivoted radially inwardly about the bent portions. This more effectively prevents damage to the tongues.

Preferably, with the strip bent in the circular shape, each tongue includes an inclined portion at a distal end portion of the tongue, and inclined radially inwardly. With this arrangement, with the sprags engaged, the tongues are inclined radially inwardly, so that when the sprags are inclined in the direction in which the sprags disengage, the tongues will never get stuck to the sprags, and thus can be smoothly deflected radially inwardly. This allows smoother sliding of the tongues on the sprags.

The strip may further include bent portions on the respective sides of each pocket so as to protrude in the same direction as the bent portions of the tongues. Such bent portions make it easier to bend the strip into a circular shape.

### ADVANTAGES OF THE INVENTION

According to the present invention, since each tongue has a cut surface formed by shearing at a distal end of the tongue, the cut surface including a droop, and the strip is bent in a circular shape such that the droops of the respective tongues are each located on the radially outer side of the cut surface, and are in contact with the respective sprags, the tongues can smoothly slide on the sprags, so that damage to the tongues are effectively prevented, and the sprags can operate reliably.

### BRIEF DESCRIPTION OF THE DRAWINGS

Fig. 1 is a front view of a portion of a sprag type one-way clutch embodying the present invention.
Fig. 2 is a vertical sectional view of the one-way clutch shown in Fig. 1.
Fig. 3 is a sectional view taken along line III-III of Fig. 2.
Fig. 4 is a sectional view taken along line IV-IV of Fig. 2.
Fig. 5 is an enlarged sectional view of a portion of Fig. 2.
Fig. 6 is an enlarged view of a portion of Fig. 5 where a sprag is in contact with a tongue.
Fig. 7 is a sectional view in which the sprags are disengaged.
Fig. 8 is an enlarged view of a portion of Fig. 7 where the sprag is in contact with the tongue.

### BEST MODE FOR EMBODYING THE INVENTION

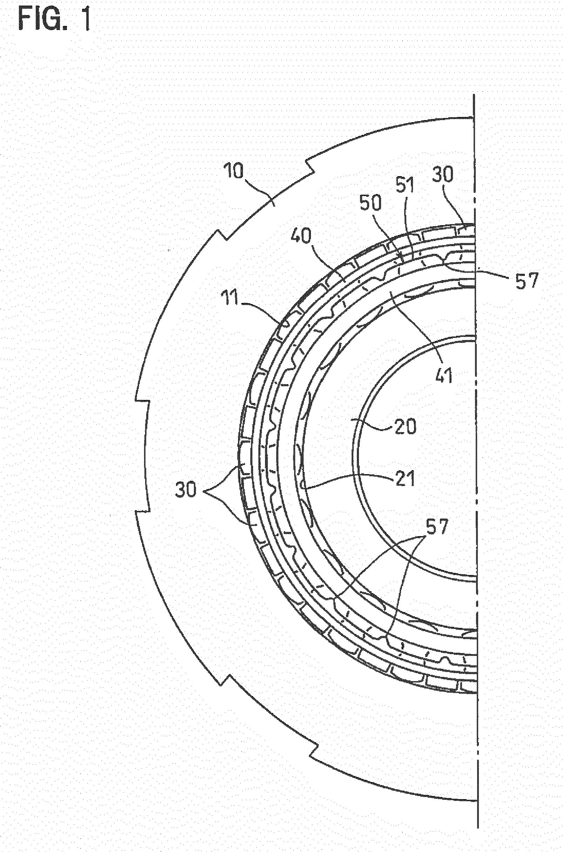

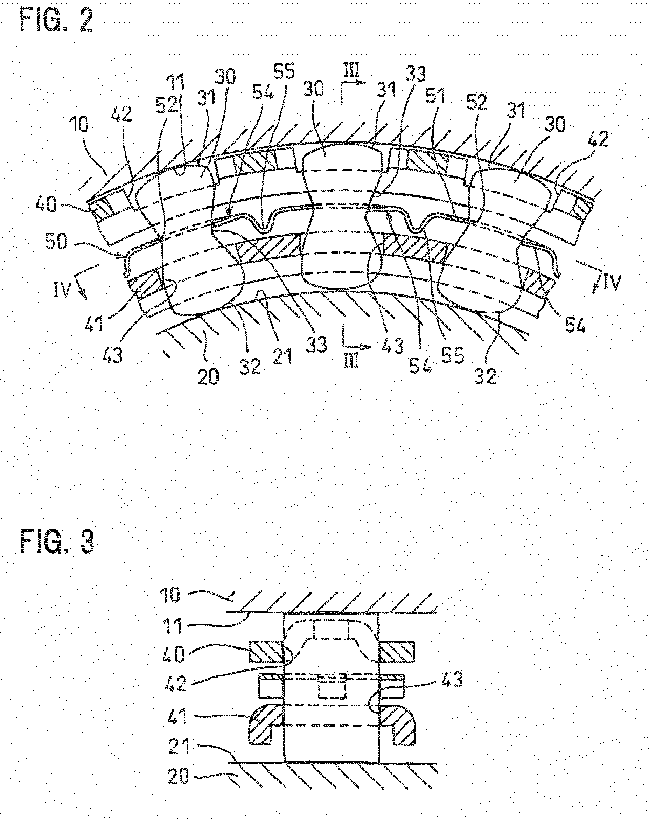

Now referring to the drawings, a sprag type one-way clutch embodying the present invention includes, as shown in Figs. 1 and 2, an outer ring 10 and an inner ring 20 located inside of the outer ring 10. A plurality of sprags 30 are mounted between the outer ring 10 and the inner ring 20. Also mounted between the outer ring 10 and the inner ring 20 are an outer retainer 40 and an inner retainer 41 that retain the sprags 30. A ribbon spring 50 is mounted between the outer retainer 40 and the inner retainer 41.

The outer ring 10 has a cylindrical radially inner surface 11, while the inner ring 20 has a cylindrical radially outer surface 21. The sprags 30 are cocoon-shaped members each having, at one end thereof, an outer ring-side cam surface 31 configured to be selectively brought into and out of engagement with the radially inner surface 11 of the outer ring 10, and at the other end thereof, an inner ring-side cam surface 32 configured to be selectively brought into and out of engagement with the radially outer surface 21 of the inner ring 20.

The outer retainer 40 and the inner retainer 41 are formed with a plurality of circumferentially equidistantly spaced apart pockets 42, and a plurality of circumferentially equidistantly spaced apart pockets 43, respectively, such that the pockets 42 is radially opposed to the respective pockets 43. Each sprag 30 is inserted in a radially opposed pair of the pockets 42 and 43.

As shown in Figs. 2 to 4, the ribbon spring 50 has a strip 51 of sheet metal made of e.g., stainless steel. The strip 51 is formed with longitudinally equidistantly spaced apart pockets 52 formed by punching, which is a kind of shearing, such that each sprag 30 is inserted in one pocket 52. Simultaneously when the pockets 52 are formed, a tongue 54 is formed on one circumferential side of each of the bridges 53 defined between the respective adjacent pairs of pockets 52 such that the tongue 54 protrudes into the corresponding pocket 52.

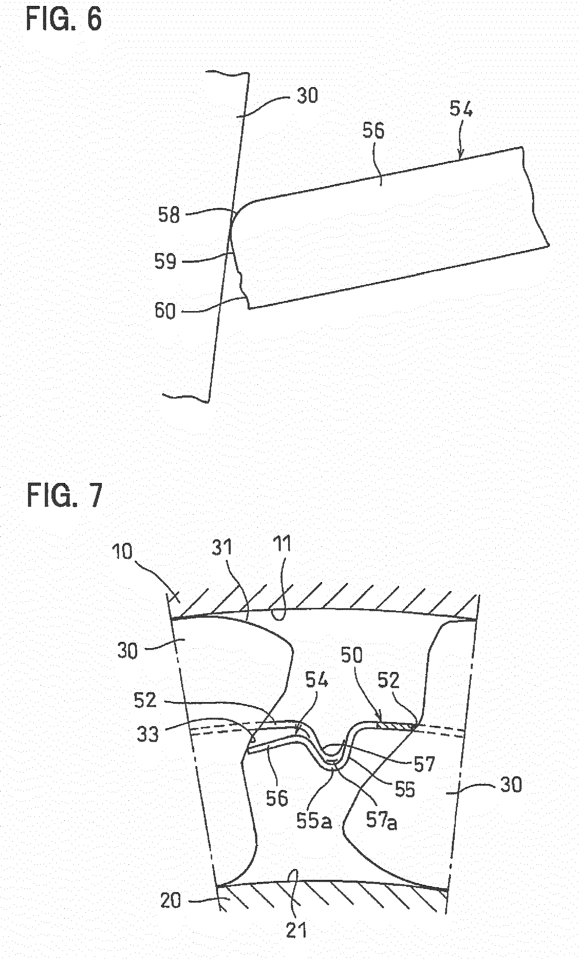

The tongue 54 has a V-shaped bent portion 55 protruding in the direction in which the tongue 54 is punched; and an inclined portion 56 connected to the distal end of the bent portion 55 and inclined in the same direction in which the bent portion 55 protrudes. The strip 51 has, on the respective sides of each pocket 52, two additional V-shaped bent portions 57 aligned with the bent portion 55 on the corresponding tongue 54 so as to protrude in the same direction as the bent portion 55. As shown in Fig. 7, the bent portions 55 and 57 have rounded apexes 55a and 57a, respectively.

Since the tongues 54 are formed by punching, each tongue 54 has, as shown in Fig. 6, a cut surface formed at its distal end by shearing, and including a droop 58 having an arc-shaped section, a shear surface portion 59, and a fractured surface portion 60.

With the sprags 30 inserted in the respective pockets 52, the ribbon spring 50 is bent into a circular shape such that their ends overlap with each other, and mounted between the outer retainer 40 and the inner retainer 41.

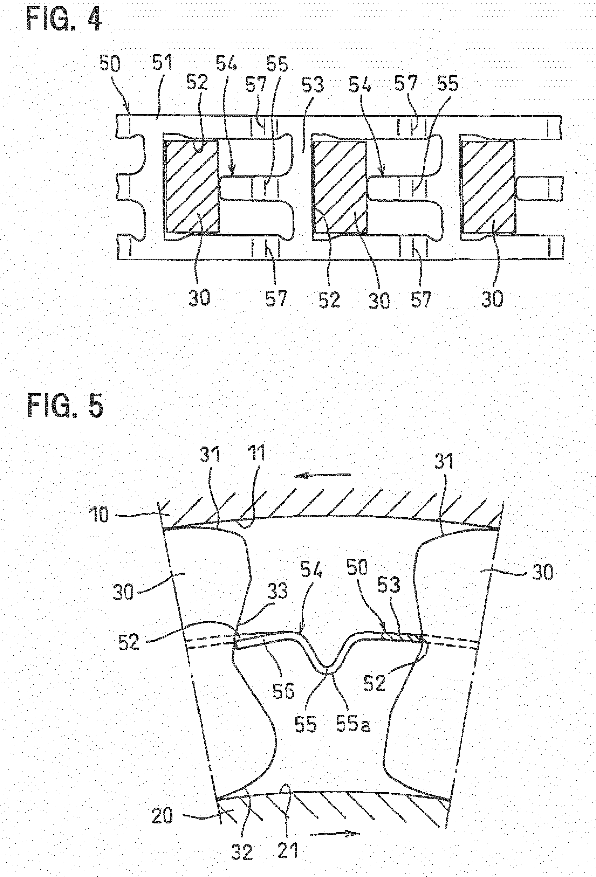

The ribbon spring 50 is mounted between the outer retainer 40 and the inner retainer 41 such that, as shown in Figs. 5 and 6, the droop 58 of each tongue 54 is located radially outwardly, and the bent portions 55 and 57 are located radially inwardly. In this state, the droop 58 of each tongue 54 comes into elastic contact with one side of the constricted portion 33 of the corresponding sprag 30 at its center, with the inclined portion 56 at the distal end portion of the tongue 54 inclined radially inwardly toward its distal end.

With the ribbon spring 50 mounted in the above-described manner, the tongues 54 impart to the respective sprags 30 a moment in one direction such that the outer ring-side cam surfaces 31 contact the outer ring radially inner surface 11, and the inner ring-side cam surfaces 32 contact the inner ring radially outer surface 21.

Figs. 2 and 5 show the state in which under the elastic force of the tongues 54 of the ribbon spring 50, the outer ring-side cam surfaces 31 of the sprags 30 are in contact with the radially inner surface 11 of the outer ring 10, and the inner ring-side cam surfaces 32 are in contact with the radially outer surface 21 of the inner ring 20.

When, in this state, the outer ring 10 and the inner ring 20 rotate relative to each other in the directions of the arrows of Fig. 5, due to the contact between the radially inner surface 11 of the outer ring 10 and the outer ring-side cam surfaces 31 of the sprags 30, and between the radially outer surface 21 of the inner ring 20 and the inner ring-side cam surfaces 32 of the sprags 30, a moment acts on the sprags 30 such that the sprags 30 are erected, with the outer ring-side cam surfaces 31 in engagement with the radially inner surface 11 of the outer ring 10, and the inner ring-side cam surfaces 32 in engagement with the radially outer surface 21 of the inner ring 20. The outer ring 10 and the inner ring 20 are thus joined together.

In this state, if the inner ring 20 is a driving ring, the rotation of the inner ring 20 is transmitted to the outer ring 10 such that the outer ring 10 and the inner ring 20 rotate in the same direction.

When the inner ring 20 rotates in the direction opposite to the direction indicated by the arrow in Fig. 5, the sprags 30 are inclined in the circumferential direction in which the inner ring-side cam surface 32 of each sprag 30 moves ahead of the outer ring-side cam surface 31 in the rotational direction. As a result, the sprags 30 disengage from the outer ring 10 and the inner ring 20, allowing the inner ring 20 to rotate independently of the outer ring 10.

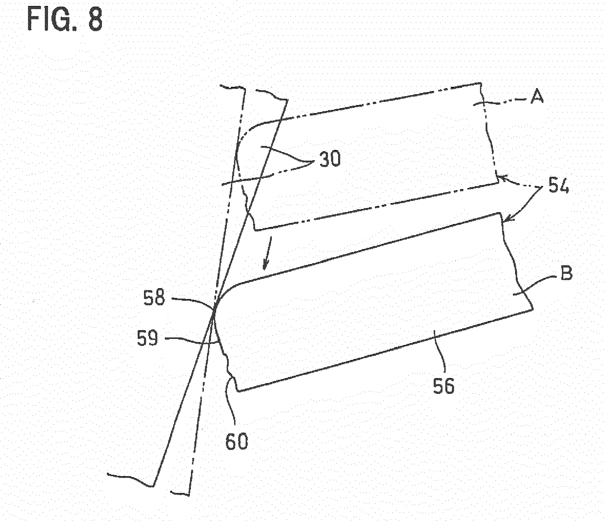

When the sprags 30 are inclined in the disengaging direction, the tongues 54 of the ribbon spring 50 come into contact with, and pushed by, the sides of the sprags 30 and pushed by the sprags 30 such that the tongues 54 are elastically deformed radially inwardly. The phantom line A in Fig. 8 shows the state of tongue 54 before being elastically deformed, while the solid line B shows the state of the tongue 54 after being elastically deformed. When the tongues 54 are elastically deformed, the tongues 54 slide on, while being in contact with, the sprags 30. If the friction coefficient at the sliding contact portions of the sprags 30 and the tongues 54 is large, the tongues 54 cannot slide smoothly on the sprags 30, and could be damaged, or even destroyed, by getting stuck in the circumferential direction.

In the above-described embodiment, however, since each tongue 54 has a droop 58 formed at the cut surface at the distal end thereof and having an arc-shaped section, and is configured such that the droop 58 is brought into contact with the sprag 30, the frictional coefficient at the sliding contact portions of the tongues 54 and the sprags 30 is extremely small, so that the tongues 54 and the sprags 30 can smoothly slide on each other. This prevents damage to the tongues 54.

As shown in Fig. 5, by providing each tongue 54 with a V-shaped bent portion 55 having a rounded apex 55a, and an inclined portion 56 at the distal end of the bent portion 55 so as to be inclined radially inwardly, the tongues 54 can be smoothly deflected radially inwardly when the sprags 30 are inclined in the circumferential direction. This allows the tongues 54 to be more smoothly slid on the sprags 30.

### DESCRIPTION OF THE NUMERALS

- 10.: Outer ring
- 11.: Radially inner surface
- 20.: Inner ring
- 21.: Radially inner surface
- 30.: Sprag
- 31.: Outer ring-side cam surface
- 32.: Inner ring-side cam surface
- 40.: Outer retainer
- 41.: Inner retainer
- 50.: Ribbon spring
- 51.: Strip
- 52.: Pocket
- 53.: Bridge
- 54.: Tongue
- 55.: Bent portion
- 55a.: Apex
- 56.: Inclined portion
- 57.: Bent portion
- 57a.: Apex
- 58.: Droop

## Claims

1. A ribbon spring of a sprag type one-way clutch, comprising an elongated strip (51) of sheet metal including a plurality of pockets (52) formed by punching, which is a kind of shearing, so as to be spaced apart from each other in a longitudinal direction of the strip (51), to define bridges (53) between respective adjacent pairs of the pockets (52), the strip (51) further including tongues (54) each protruding from one circumferential side of one of the bridges (53) into a corresponding one of the pockets (52), wherein the strip (51) is mounted between an outer ring (10) and an inner ring (20) of the sprag type one-way clutch, while being bent in a circular shape such that sprags (30) of the sprag type one-way clutch, which are inserted in the respective pockets (52), are biased by the respective tongues (54) in a direction in which the sprags (30) engage,
**characterized in that** the tongues (54) each have a cut surface formed by shearing at a distal end of the tongue (54), the cut surface including a droop (58), and the strip (51) is bent in the circular shape such that the droops (58) of the respective tongues (54) are each located on a radially outer side of the cut surface, and are in contact with the respective sprags (30).

2. The ribbon spring of claim 1, wherein with the strip (51) bent in the circular shape, each of the tongues (54) includes a radially inwardly protruding V-shaped bent portion (55) located at a center of the tongue (54) in the longitudinal direction of the strip (51).

3. The ribbon spring of claim 1 or 2, wherein with the strip (51) bent in the circular shape, each of the tongues (54) includes an inclined portion (56) at a distal end portion of the tongue (54), and inclined radially inwardly.

4. The ribbon spring of claim 2 or 3, wherein the strip (51) includes bent portions (57) on respective sides of each of the pockets (52) so as to protrude in a same direction as the bent portions (55) of the tongues (54).

5. A sprag type one-way clutch comprising an outer ring (10), an inner ring (20), a plurality of sprags (30) mounted between the outer ring (10) and the inner ring (20), a retainer (40, 41) retaining the sprags (30), and a ribbon spring (50) biasing the sprags (30) in a direction in which the sprags (30) engage,
**characterized in that** the ribbon spring (50) comprises the ribbon spring of any of claims 1 to 4.
